# NEUE EUROPÄISCHE PATENTSCHRIFT

(11) **EP 1 134 050 B2**
(45) Veröffentlichungstag und Bekanntmachung des Hinweises auf die Entscheidung über den Einspruch: **03.01.2007**
(45) Hinweis auf die Patenterteilung: 14.04.2004
(21) Anmeldenummer: 01112556.4
(22) Anmeldetag: 20.01.1998
(51) Int. Cl.: B23B 29/034

(54) **ZUSTELLSYSTEM F?R EIN ROTIERENDES SCHNEIDWERKZEUG**
ADVANCING SYSTEM FOR A ROTARY CUTTING TOOL
SYSTEME D'AVANCE POUR UN OUTIL DE COUPE ROTATIF

(30) Priorität: 24.03.1997 DE 19712238
(43) Veröffentlichungstag der Anmeldung: 19.09.2001
(62) Teilanmeldung aus: 98906824.2
(73) Patentinhaber: Ex-Cell-O GmbH, 73054 Eislingen (DE)
(72) Erfinder: Oswald, Johann, 89558 Böhmenkirch (DE); Grüner, Günther, 73337 Bad Überkingen (DE)
(74) Vertreter: Hoeger, Stellrecht & Partner Patentanwälte

(56) Entgegenhaltungen:
- CH-A- 682 891
- DE-A- 2 405 694
- DE-C- 4 015 509
- DE-C2- 19 758 611
- DE-C5- 19 758 611
- DE-U- 29 622 645
- GB-A- 2 013 539
- GB-A- 2 130 937

## Beschreibung

Die Erfindung betrifft ein Zustellsystem für ein rotierendes Schneidwerkzeug gemäß dem Oberbegriff des Patentanspruches 1.
Ein Zustellsystem für ein rotierendes Schneidwerkzeug, mit einer Werkzeugaufnahme, die von einer Spindel antreibbar ist und mit einer die Werkzeugaufnahme in Zustellrichtung bewegenden Stelleinrichtung, die eine Steuerfläche hat, der ein Übertragungselement zugeordnet ist, über das bei einer Relativbewegung der Steuerfläche mit Bezug zum Übertragungselement die Werkzeugaufnahme in Stellrichtung verschiebbar ist, ist aus der GB 2 130 937 A bekannt.
Aus der DE 296 22 645 U1 ist eine Drehbearbeitungseinrichtung für eine CNC-Werkzeugmaschine mit einem Zustellsystem gemäß dem Oberbegriff von Anspruch 1 bekannt mit einem durch eine Hauptwelle rotatorisch antreibbaren Werkzeugträger für ein Drehwerkzeug. Es ist ein Hauptantriebsmotor für die Hauptwelle vorgesehen. Ferner ist eine Verstellvorrichtung zur Veränderung des radialen Abstands einer Werkzeugschneide von einer Antriebwellemachine vorgesehen, wobei diene Verstellvorrichtung einen zweiten Motor und einen mit diesem verbundene Hilfswelle aufweist. Die Hauptwelle und die Hilfswelle sind relativ zueinander verdrehbar.

Derartige Zustellsysteme werden In der Serienfertigung von Gehäusebauelementen, beispielsweise von Motor-/Getriebegehäusen eingesetzt. Dabei werden die jeweiligen Bearbeitungsstationen, beispielsweise Transfermaschinen, Feinbohreinheiten, Sondermaschinen, Bohrwerke oder Bearbeitungszentren mit einem Zustellsystem für Bohrwerkzeuge ausgerüstet, bei denen das Schneidwerkzeug über das Zustellsystem mit einer Arbeitsspindel der Werkzeugmaschine gekoppelt ist.

Das Zustellsystem erlaubt es während der Produktion auftretende Fehler zu kompensieren, die beispielsweise durch Schneidenverschleiß, Schneidentoleranz, Einstellfehler oder Maßschwankungen, verursacht durch Temperaturänderungen der Maschine, etc. auftreten können. Desweiteren ermöglichen die Zustellsysteme das Ausbilden von Zylinderbohrungen mit engsten Toleranzen oder mit Bohrungen, deren Radius in Abhängigkeit von der Bohrungstiefe veränderlich ist (beispielsweise Ausbilden von Fasen, Radien, Einstichen, konvexen, konkaven oder kegeligen Umfangswandungen).

Bei dem bekannten Systemen können die Schneidwerkzeuge an unterschiedlichen Werkzeugaufnahmen, beispielsweise Bohrstangen, sogenannten Exzenterspindeln oder Zustellköpfen ausgebildet werden.

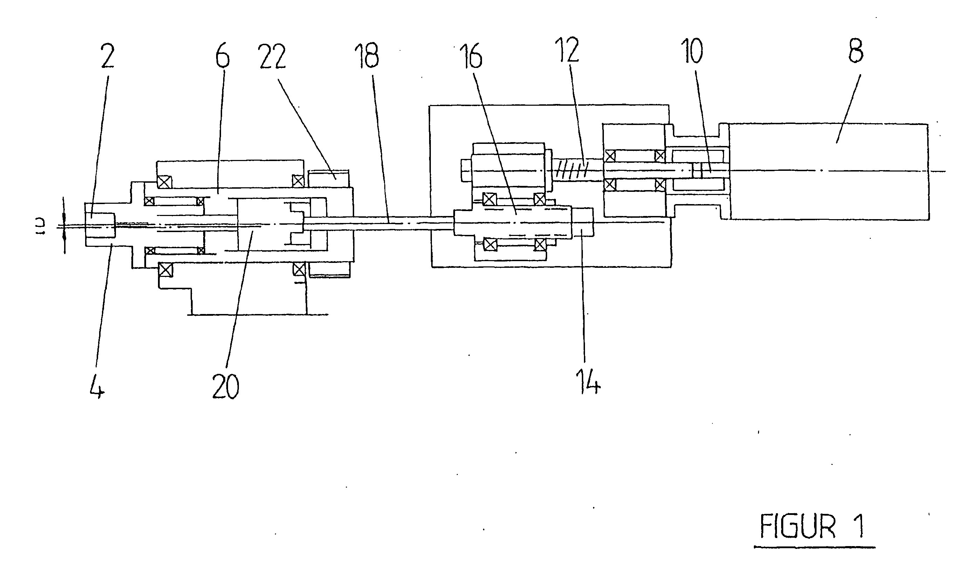

In Figur 1, auf die bereits an dieser Stelle Bezug genommen wird, ist ein bekanntes Zustellsystem dargestellt, das von der Anmelderin unter der Bezeichnung "Exzenterspindel" vertrieben wird. Bei diesem Zustellsystem ist eine Werkzeugaufnahme 2 koaxial an einer Exzenterspindel 4 angeordnet, die ihrerseits drehbar in einer Hauptspindel 6 gelagert ist. Die Achse der Exzenterspindel 4 ist gegenüber der Achse der Hauptspindel 6 und das Maß e versetzt. D.h. durch Verdrehen der Exzenterspindel 4 läßt sich ein in der Werkzeugaufnahme 2 aufgenommenes Schneidwerkzeug (nicht dargestellt) radial gegenüber der Achse der Hauptspindel 6 versetzen und somit eine Zustellbewegung durchführen.

Bei dem bekannten Zustellsystem erfolgt die Verstellbewegung der Schneide mit Bezug zur Hauptspindel 6 mittels eines vergleichsweise kompliziert aufgebauten Antriebssystems, dessen Hauptkomponenten im folgenden kurz beschrieben werden.

Das bekannte Antriebssystem hat einen Servomotor 8, dessen Ausgangswelle 10 mit einer Kugelumlaufspindel verbunden ist, die in Figur 1 mit dem Bezugszeichen 12 angedeutet ist. Durch die Kugelumlaufspindel 12 wird die Drehbewegung des Servomotors 8 in eine Axialbewegung umgesetzt, durch die in Abhängigkeit von der Ansteuerung ein Stellschlitten 14 in Axialrichtung, d.h. parallel zur Achse der Hauptspindel 6 verschiebbar ist. Im Stellschlitten 14 ist ein Verbindungselement 16 drehbar gelagert, das mit einer Verbindungsstange 18 gekoppelt ist. Die Verbindungsstange 18 ist axial verschiebbar in der Hauptspindel 6 geführt. Zwischen dem werkzeugaufnahmeseitigen Endabschnitt der Verbindungsstange 18 und dem benachbarten Endabschnitt der in der Hauptspindel 6 geführten Exzenterspindel 4 ist ein Hub-Drehwandler 20 angeordnet, über den die Axialbewegung der Verbindungsstange 18 in eine Drehbewegung und somit eine Verdrehung der Exzenterspindel 4 mit Bezug zur Hauptspindel 6 umsetzbar ist.

Zur Verstellung wird der Servomotor 8 entsprechend angesteuert, so daß über die Kugelumlaufspindel 12 der Stellschlitten 14 spielfrei entlang seiner Axialführung bewegt wird und somit die Verbindungsstange 18 in die Hauptspindel 6 eintaucht. Die Axialbewegung der Verbindungsstange 18 wird durch den Hub-Drehwandler 20 in eine Drehbewegung der Exzenterspindel 4 umgesetzt, so daß in Abhängigkeit von der Ansteuerung des Schrittmotors 8 die Exzenterspindel 4 verstellt wird, so daß die Werkzeugschneide mit Bezug zur Hauptspindel 6 einstellbar ist.

Die Hauptspindel 6 wird über eine strichpunktiert angedeutete Riemenscheibe 22 angetrieben, so daß das in der Werkzeugaufnahme 2 aufgenommene Schneidwerkzeug - beispielsweise ein Ausdrehwerkzeug - in Rotation versetzt wird. Da die zur Verstellung der Werkzeugschneide erforderlichen Bauelemente im wesentlichen in der Hauptspindel 6 gelagert oder mit dieser verbunden sind, müssen erhebliche Anstrengungen unternommen werden, um die gewünschte spielfreie Übertragung der Stellbewegung des Servomotors 8 auf die Exzenterspindel 4 zu gewährleisten.

Das in Figur 1 dargestellte System hat darüber hinaus einen sehr komplexen Aufbau, da eine mehrfache Übertragung von translatorischen Bewegungen in Rotationsbewegungen erforderlich ist. Die bewegten Massen sind bei diesem Zustellsystem relativ groß, so daß auch die Hauptspindellagerung und die zum Antrieb der Hauptspindel 6 erforderlichen Motoren entsprechend ausgelegt werden müssen.

Demgegenüber liegt der Erfindung die Aufgabe zugrunde, ein Zustellsystem für ein Schneidwerkzeug zu schaffen, durch das mit minimalem vorrichtungstechnischen Aufwand eine präzises Zustellung ermöglicht ist.

Diese Aufgabe wird durch die Merkmale des Patentanspruches 1 gelöst.

Das Zustellsystem ist mit einer Spindel und einer Betätigungswelle versehen, die unabhängig voneinander antreibbar sind. Die Betätigungswelle trägt an ihrem Außenumfang eine Steuerfläche, die mit einem Übertragungselement zusammenwirkt, um eine Zustellbewegung zu bewirken.

Die Betätigungswelle ist über einen eigenen Zustellmotor wahlweise synchron mit der Spindel oder aber mit einer vorbestimmten Drehzahldifferenz zur Spindeldrehzahl antreibbar sein. Im erstgenannten Fall, d.h. wenn die Betätigungswelle und die Spindel mit gleicher Drehzahl angetrieben werden, erfolgt keine Zustellbewegung der Stelleinrichtung, da das Übertragungselement seine Relativposition zur Steuerfläche beibehält. Im letztgenannten Fall, d.h. wenn die Spindel und die Betätigungswelle mit unterschiedlichen Drehzahlen angetrieben werden, erfolgt eine Zustellbewegung, da die Steuerfläche mit Bezug zum Übertragungselement bewegt wird, solange die Drehzahldifferenz aufrechterhalten bleibt. Sobald die das Schneidwerkzeug tragende Werkzeugaufnahme in die Sollposition bewegt ist, wird die Drehzahl der Betätigungswelle wieder auf die Drehzahl der Spindel (oder umgekehrt) gebracht, so daß keine weitere Relativbewegung zwischen Steuerfläche und Übertragungselement erfolgt - der Zustellvorgang ist abgeschlossen. Die Steuerfläche ist in der Regel am Außenumfang eines mit der Betätigungswelle verbundenen Wellenabschnitts ausgebildet und kann beispielsweise in Evolventenform ausgebildet werden.

Ein wesentlicher Vorteil des erfindungsgemäßen Zustellsystems liegt darin, daß im wesentlichen nur rotierende Bauelemente zur Bewirkung der Zustellbewegung eingesetzt werden, so daß der vorrichtungstechnische Aufwand gegenüber den herkömmlichen Lösungen, bei denen Translationsbewegungen in Rotationsbewegungen umgesetzt werden mußten, erheblich verringert werden kann.

Der Einsatz rotationssymmetrischer Bauelemente ermöglicht des weiteren extrem hohe Drehzahlen sowohl für die Spindel als auch für die Betätigungswelle, so daß hohe Zerspanungsleistungen realisierbar sind.

Durch geeignete Wahl der Steuerflächengeometrien lassen sich unterschiedliche Zustellcharakteristiken realisieren, so daß auch kleinste Maßkorrekturen oder -kompensationen im Bereich von 0,001 mm durchführbar sind.

Da die Zustellbewegung alleine aufgrund einer Drehzahldifferenz zwischen Betätigungswelle und Spindel erfolgt, läßt sich nahezu der gesamte Bereich der Steuerfläche durch Drehzahlvariation stufenlos ausnutzen. Durch Wahl geeigneter Antriebssysteme können schnelle Zustellbewegungen auch während des Zerspanungsvorgangs realisiert werden.

Besonders vorteilhaft ist es, wenn die Betätigungswelle zumindest abschnittsweise in der Spindel geführt ist. Die Betätigungswelle kann in diesem Fall als Hohlwelle ausgeführt werden, so daß Kühl-/Schmiermittel durch die Betätigungswelle hindurch zur Werkzeugschneide geführt werden kann.

Die Werkzeugaufnahmen ist als Bohrstange ausgeführt, an deren Außenumfang ein Biegeklemmhalter befestigt ist, dessen freier Endabschnitt durch das gegen die Steuerfläche vorgespannte Übertragungselement radial auslenkbar ist.

Die Herstellung der Steuerfläche läßt sich vereinfachen, wenn die Betätigungswelle mit einem Steuerteil versehen wird, an dem die Steuerfläche ausgebildet ist, so daß lediglich das Steuerteil einer Feinstbearbeitung zur Ausbildung der Steuerfläche unterzogen werden muß.

Die Steuerfläche ist in Evolventenform gekrümmt ausgeführt.

Zusätzlich zum radial verstellbaren Schneidwerkzeug kann die Werkzeugaufnahme noch ein weiteres Vorbearbeitungswerkzeug tragen, das vorzugsweise nicht über das erfindungsgemäße Zustellsystem einstellbar ist.

Die Spindel und die Betätigungswelle können über jeweils einen Riementrieb angetrieben werden oder - alternativ dazu - direkt an den Rotor eines Elektromotors, beispielsweise eines Gleichstrommotors, eines Drehstrommotors mit einem Frequenzumformer (beispielsweise eines Drehstrom-Asynchronmotors) angekoppelt sein.

Zur Ansteuerung der Motoren läßt sich prinzipiell eine analoge oder eine digitale Antriebstechnik einsetzen.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert.
Es zeigen:
Figur 1 ein bekanntes Zustellsystem mit Exzenterspindel;
Figur 2 den werkzeugseitigen Teil einer Ausführungsbeispiels eines erfindungsgemäßen Zustellsystems;
Figur 3 eine Prinzipskizze zur Verdeutlichung der Funktion eines Ausführungsbeispiels eines erfindungsgemäßen Zustellsystems;
Figur 4 eine Antriebsvariante für das Zustellsystem aus Figur 2;
Figur 5 eine weitere Antriebsvariante für das Ausführungsbeispiel aus Figur 2;
Figur 6 eine Weiterbildung des Ausführungsbeispiels aus Figur 2 und
Figur 7 ein Ausführungsbeispiel eines nicht erfindungsgemäßen Zustellsystems mit Zustellkopf.

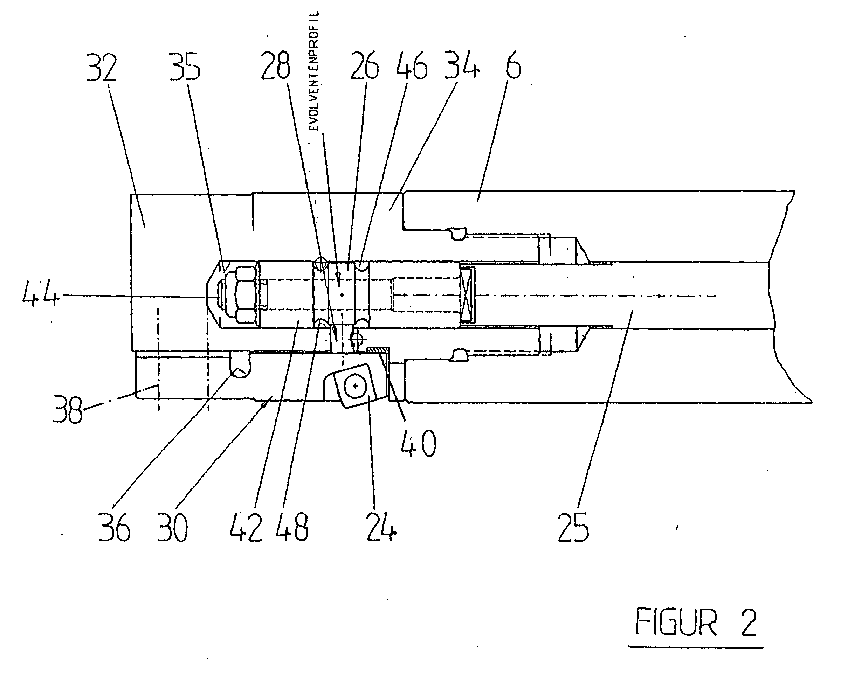

Anhand der Figuren 2 bis 5 wird zunächst ein Ausführungsbeispiel eines erfindungsgemäßen Zustellsystems mit unterschiedlichen Antriebsvarianten erläutert. In der folgenden Beschreibung werden für einander entsprechende Bauelemente die gleichen Bezugszeichen wie bei der eingangs beschriebenen Figur 1 verwendet.

Bei dem im folgenden beschriebenen Ausführungsbeispiel ist das Zustellsystem mit einem Feinbohrwerkzeug versehen, über das beispielsweise Lagerbohrungen einer Lagergasse für eine Kurbelwellen- oder Nockenwellenlagerung oder ähnliches bearbeitbar sind.

Ausweislich Figur 2 hat das erfindungsgemäße Zustellsystem eine Hauptspindel 6, an der das Schneidwerkzeug mit einer Werkzeugschneide, im vorliegenden Fall eine Wendeschneidplatte 24 befestigt ist. Zur Kompensation von Fehlern, die beispielsweise durch Schneidenverschleiß, Schneidentoleranz, Einstellfehlern oder Temperaturänderungen auftreten können, kann die Schneide der Wendeschneidplatte 24 während des Bearbeitungsvorgangs in Radialrichtung verstellt werden. Dazu ist in der Hauptspindel 6 eine Betätigungswelle 25 gelagert, die an ihrem werkzeugseitigen Endabschnitt einen Steuernocken mit einer Steuerfläche 26 hat. An dieser liegt ein Übertragungselement, im Ausführungsbeispiel gemäß Figur 2 ein Stift 28 an, der über einen die Wendeschneidplatte 24 tragenden Biegeklemmhalter 30 gegen die Steuerfläche 26 vorgespannt ist.

Wie des weiteren Figur 2 entnehmbar ist, hat die Spindel 6 eine Bohrstange oder ein sonstiges Endstück 32, das mit einem nabenförmigen Vorsprung 34 in eine radialerweiterte Aufnahmebohrung der Spindel 6 eingeschraubt ist. Die Spindel 6 ist von einer Führungsbohrung 35 durchsetzt, die als Sacklochbohrung im Endstück 32 endet. Der Stift 28 durchsetzt die Umfangswandung der Führungsbohrung 35 und hat dabei eine größere Länge als die Wandstärke in diesem Bereich, so daß seine Endabschnitte in die Führungsbohrung 35 eintauchen bzw. aus dem Außenumfang des Endstückes 34 hervorstehen.

Der Biegeklemmhalter 30 ist als Blattfeder mit einer die Federwirkung unterstützenden Ausnehmung 36 ausgebildet und mit dem in Figur 2 linken Endabschnitt durch strichpunktiert angedeutete Befestigungsschrauben 38 an einer Abflachung des Endstückes 32 (Bohrstange) befestigt. Durch eine Radialbewegung des Stifts 28 kann der die Wendeschneidplatte 24 tragende Endabschnitt des Biegeklemmhalters 30 von einer Dichtung abgehoben und radial nach außen bewegt werden, so daß die Schneide der Wendeschneidplatte in Zustellrichtung bewegt wird.

Bei dem in Figur 2 dargestellten Ausführungsbeispiel ist die Steuerfläche 26 nicht direkt an der Betätigungswelle 25 sondern an einem Steuerteil 42 ausgebildet, das über einen Gewindebolzen 44 mit der Betätigungswelle 25 verschraubt ist. Zur drehsicheren Verbindung greift der in Figur 2 rechte Endabschnitt des Steuerteils 42 formschlüssig in den benachbarten Endabschnitt der Betätigungswelle 25 ein.

Die Steuerfläche 26 ist zwischen zwei im Axialabstand zueinander stehenden Ringnuten 46, 48 ausgebildet.

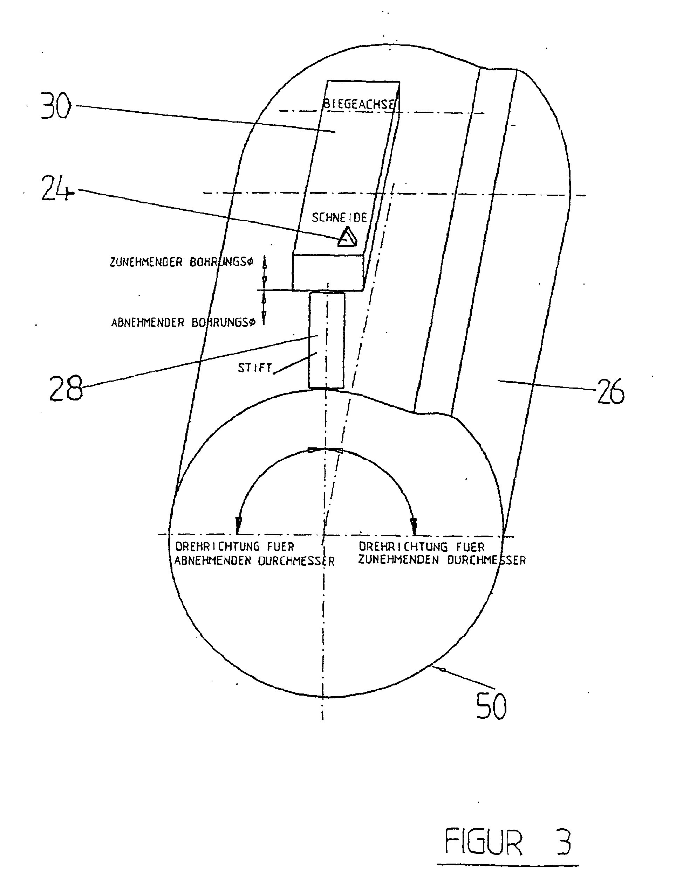

Figur 3 zeigt eine schematische dreidimensionale Darstellung, aus der das Funktionsprinzip der erfindungsgemäßen Zustelleinrichtung entnehmbar ist. Demgemäß ist die Betätigungswelle 25 oder, genauer gesagt, der Außenumfang des Steuerteiles 42 im Bereich zwischen den in Figur 3 nicht dargestellten Ringnuten 46, 48 in Form einer Evolvente 50 gekrümmt, so daß die Steuerfläche 26 das in Figur 3 angedeutete Querschnittsprofil erhält.

Der Stift 28 ist über den federnden Endabschnitt des Biegeklemmhalters 30 gegen das Evolventenprofil der Steuerfläche 26 vorgespannt, d.h. der Stift 28 liegt einerseits am Biegeklemmhalter 30 und andererseits am Steuerteil 42 an. Der Deutlichkeit halber sei angemerkt, daß der Biegeklemmhalter 30 in der Darstellung nach Figur 3 an der nicht dargestellten Hauptspindel 6 befestigt ist.

Bei einer Relativverdrehung des Steuerteiles 42 mit der Steuerfläche 26 in Pfeilrichtung nach rechts (Drehrichtung für zunehmenden Durchmesser) wird der Stift 28 in der Darstellung nach Figur 3 durch das Evolventenprofil 50 nach oben ausgelenkt, so daß der Biegeklemmhalter 30 und damit das Schneidwerkzeug 24 in Radialrichtung zugestellt wird. Durch eine derartige Zustellbewegung wird somit der Bohrungsdurchmesser vergrößert.

Bei einer Relativverdrehung der Betätigungswelle 25 und damit der Steuerfläche 26 nach links (Ansicht nach Figur 3) wird der Stift 28 nach unten bewegt, so daß die Radialauslenkung des Biegeklemmhalters 30 verringert und der Bohrungsdurchmesser verkleinert werden.

Eine Besonderheit des erfindungsgemäßen Zustellsystems ist, daß im Ausgangszustand, d.h. dann, wenn keine Zustellung gewünscht ist, die Hauptspindel 6 und die Betätigungswelle 25 synchron mit gleicher Drehzahl angetrieben werden, so daß der in der Hauptspindel 6 befestigte Stift 28 seine Relativposition auf dem Evolventenprofil 50 beibehält und somit keine Radialauslenkung des an der Hauptspindel 6 befestigten Biegeklemmhalters 30 erfolgt.

Zur Bewirkung einer Zustellbewegung wird die Drehzahl der Betätigungswelle 25 und damit der Steuerfläche 26 gegenüber der Drehzahl der Hauptspindel 6 verändert, so daß die Steuerfläche in der vorbeschriebenen Art und Weise gegenüber dem Stift 28 gedreht wird und somit die Auslenkung durch Wahl der Drehzahldifferenz einstellbar ist. Sobald die gewünschte Auslenkung des Biegeklemmhalters 30 eingestellt ist, wird die Drehzahl der Betätigungswelle 25 wieder an die Spindeldrehzahl angepaßt, so daß keine weitere Zustellbewegung erfolgt. Die Zustellung erfolgt vorzugsweise während des Zerspanungsvorgangs, so daß keinerlei Stillstandszeiten durch den Zustellvorgang verursacht werden. Selbstverständlich kann die Zustellbewegung auch dann erfolgen, wenn die Werkzeugschneide außer Eingriff mit dem Werkstück steht.

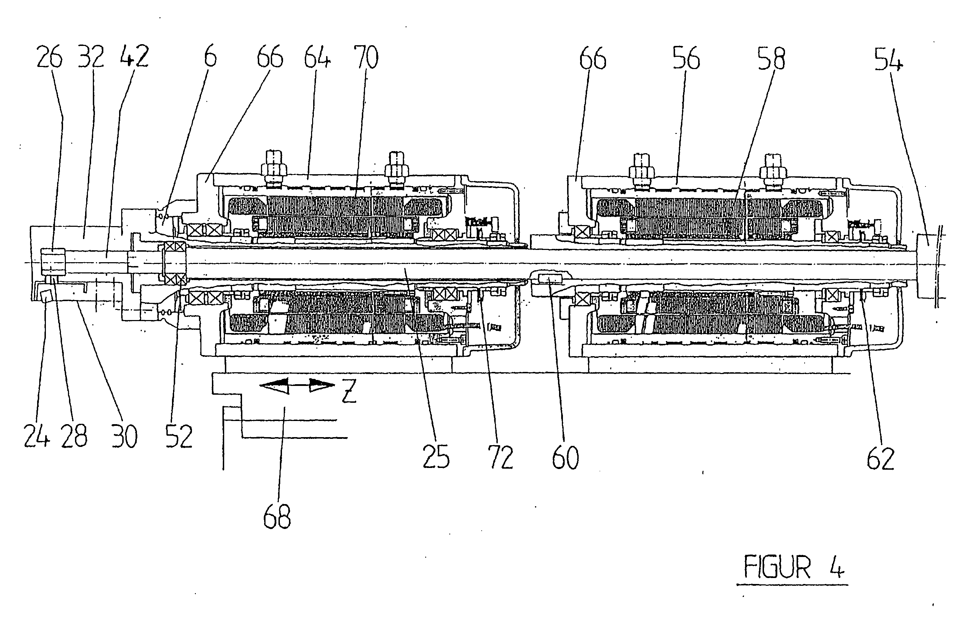

Figur 4 zeigt in stark vereinfachter Form einen Schnitt durch das in Figur 2 dargestellte Zustellsystem, wobei der Antrieb des Zustellsystems detailliert in Schnittdarstellung gezeigt wird.

Der in Figur 4 linke Teil entspricht im wesentlichen der Darstellung aus Figur 2. Gezeigt ist somit ein Feinbohrwerkzeug, bei dem das Endstück 32 - auch Bohrstange genannt - an der Hauptspindel 6 befestigt ist. In der Hauptspindel 6 ist die Betätigungswelle 25 geführt, an deren in Figur 4 linken Endabschnitt das Steuerteil 42 mit der Steuerfläche 26 angekuppelt ist. Der Stift 28 ist zwischen Biegeklemmhalter30 und der Steuerfläche 26 in der Umfangswandung der Bohrstange 32 geführt.

Die Betätigungswelle 25 ist über Wälzlager 52 in einer Lagerbohrung der Hauptspindel 6 gelagert. An dem vom Lager 52 entfernten Endabschnitt der Betätigungswelle 25 ist eine rotierende Zuführung 54 für Kühl-/Schmiermedien (beispielsweise Öl, Luft) angeordnet. Die Betätigungswelle 25 und das Steuerteil 42 sind mit einer Axialbohrung versehen, über die das Kühl-/Schmiermittel von der Zuführung 54 zum Schneidwerkzeug führbar ist. In diesem Bereich sind weitere, nicht gezeigte Lager zur Abstützung der Betätigungswelle 25 vorgesehen. Die Lagerung kann auch auf andere, konstruktiv sinnvolle Weise ausgelegt werden.

Der Antrieb der derart gelagerten Betätigungswelle 25 erfolgt über einen Zustellmotor 56, dessen Rotor 58 drehfest mit der Betätigungswelle 25 verbunden ist. Als Zustellmotor 56 sind unterschiedliche Bauarten, wie beispielsweise Gleichstrommotoren oder Drehstrommotoren mit Frequenzumformer einsetzbar. Wichtig ist, daß der Rotor 58 spielfrei mit der Betätigungswelle 25 gekoppelt ist. Im vorliegenden Fall erfolgt dies durch eine Paßfeder 60.

Die Drehzahl der Betätigungswelle 25 und damit des Rotors 58 wird über einen Meßaufnehmer 62 erfaßt. Der Elektromotor 56 hat ein Gehäuse 66, in dem Wälzlager zur Abstützung des Rotors 58 angeordnet sind. Das Gehäuse 66 ist an der Werkzeugmaschine befestigt.

Der Antrieb der Hauptspindel 6 erfolgt über einen Spindelmotor 64, der vom Grundprinzip her baugleich mit dem Zustellmotor 56 ist. In der Regel wird der Spindelmotor 64 jedoch eine höhere Antriebsleistung als der Zustellmotor erfordern, da durch diesen die Zerspanungsleistung aufzubringen ist.

Das Gehäuse 66 des Spindelmotors ist auf einer Vorschubeinheit oder einem Bohrschlitten 68 der Werkzeugmaschine befestigt, der in Z-Richtung, d.h. in Axialrichtung der auszubildenden Bohrung verschiebbar ist.

Ein Rotor 70 des Spindelmotors 64 ist spielfrei mit der Hauptspindel 6 verbunden, wobei die Lagerung des Rotors 70 wiederum über Wälzlager im Gehäuse 66 erfolgt. Die Drehzahl des Rotors 70 und damit der Hauptspindel 6 wird über einen Meßaufnehmer 72 erfaßt. Die in Figur 4 dargestellte Ausführungsform des Zustellsystems hat aufgrund der koaxialen Ausrichtung der Hauptspindel 6, der Betätigungswelle 25 und der beiden Antriebsmotoren 56, 64 einen sehr kompakten Aufbau, wobei durch die direkte Ankopplung der beiden Motoren 56, 64 die rotierenden Massen auf ein Minimum beschränkt sind. Durch geeignete Antriebstechnik lassen sich die beiden Antriebsmotoren 56, 64 synchron oder exakt mit der gewünschten Drehzahldifferenz einstellen, so daß die gesamte Steuerfläche für die Zustellbewegung einstellbar ist. Die Ansteuerung der beiden Motoren 56, 64 erfolgt vorzugsweise über digitale Antriebstechnik.

Wie bereits vorstehend angedeutet wurde, werden bei der Ausbildung einer zylindrischen Bohrung beide Antriebsmotoren 56, 64 mit der gleichen Drehzahl betrieben, wobei die Relativposition des Stiftes 28 mit Bezug zur Steuerkurve 26 zunächst durch eine geeignete Drehzahldifferenz eingestellt wird. Der Durchmesser der fertiggestellten Bohrung wird während des Bearbeitungsvorgangs oder unmittelbar danach über eine geeignete Meßstation erfaßt, so daß bei Abweichungen vom Sollmaß eine entsprechende Kompensation durch Ansteuerung des Zustellmotors 56 erfolgen kann.

Bei der Ausbildung von Bohrungen, deren Durchmesser in Abhängigkeit von der Bohrungslänge variabel ist (beispielsweise Bohrungen mit konvex- oder konkavgekrümmten Umfangswandungen oder bei der Ausbildung von Nuten, etc.), erfolgt die Ansteuerung des Zustellmotors 56 in Abhängigkeit von dem Vorschub oder der Bohrungstiefe. D.h. bei derartigen Anwendungen muß die Steuerung des Vorschubsignales und das Ist-Maß der Bohrungen berücksichtigt werden, um die erforderliche Zustellbewegung über eine Drehzahldifferenz einstellen zu können.

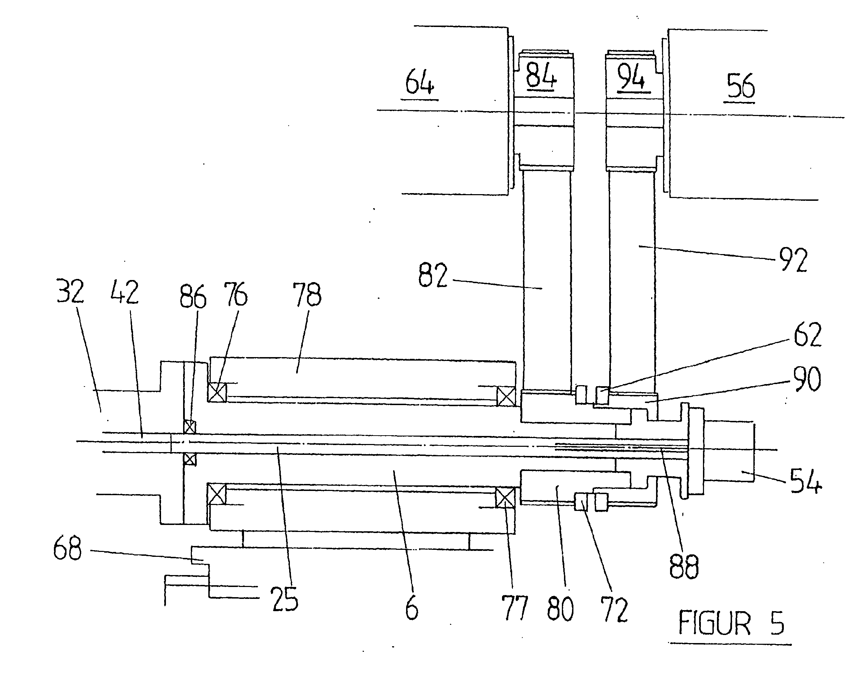

In Figur 5 ist eine weitere Variante eines Antriebs für das Zustellsystem angedeutet.

Während beim vorbeschriebenen Ausführungsbeispiel die Antriebsmotoren direkt an die Hauptspindel 6 bzw. die Betätigungswelle 25 angekoppelt waren, wird bei dem in Figur 5 dargestellten Ausführungsbeispiel, bei dem lediglich der antriebsseitige Teil des Zustellsystems gezeigt ist, ein Riementrieb zur Übertragung der Antriebsmomente des Zustellmotors 56 bzw. des Spindelmotors 64 verwendet.

Die Hauptspindel 6 ist über Wälzlager 76, 77 in einem Gehäuse 78 gelagert, das am Bohrschlitten 68 befestigt ist. An dem in Figur 5 rechten, in Radialrichtung zurückgestuften Endabschnitt der Hauptspindel 6 ist eine Spindelzahnriemenscheibe spielfrei gelagert, die von einem Zahnriemen 82 angetrieben wird, der seinerseits mit einer Abtriebsscheibe 84 des Spindelmotors 64 kämmt, der im Parallelabstand zur Spindelachse angeordnet ist. Der in Figur 5 linke Endabschnitt der Betätigungswelle 25 ist - ähnlich wie beim vorbeschriebenen Ausführungsbeispiel - über Wälzlager 86 in der Hauptspindel 6 gelagert. Der andere Endabschnitt der Betätigungswelle 25 wird über Lageranordnungen abgestützt, die im Bereich der Zuführung 54 für Kühl-/ Schmiermittel angeordnet sein können. Über diese rotierende Zuführung 54 kann das Kühl-/Schmiermittel durch die gestrichelt angedeutete Axialbohrung 88 hindurch zur Werkzeugschneide geführt werden.

Im Bereich der Zuführung 54 ist eine Zahnriemenscheibe 90 drehfest mit der Betätigungswelle 25 verbunden, die über einen Zahnriemen 92 mit der Abtriebsscheibe 94 kämmt, so daß das Antriebsmoment des Zustellmotors 56 auf die Betätigungswelle 25 übertragbar ist.

Die Drehzahlen der Spindel-Zahnriemenscheibe 80 und der Zahnriemenscheibe 90 werden wiederum über Meßaufnehmer 72 bzw. 62 aufgenommen, die mit der Steuereinheit zur Ansteuerung der beiden Antriebsmotoren 56, 64 verbunden sind.

Die Ansteuerung erfolgt im wesentlichen auf die gleiche Weise wie beim vorbeschriebenen Ausführungsbeispiel, so daß auf weitere Erläuterungen verzichtet werden kann.

Die in Figur 5 dargestellte Variante hat den Vorteil, daß die Axiallänge des Zustellsystems gegenüber dem Ausführungsbeispiel aus Figur 4 geringer ist und daß der Zahnriemenantrieb eine robuste und einfach zu wartende Konstruktion darstellt, die die Verwendung von Standardbauteilen ermöglicht und auch nachträglich durch Austausch der Zahnriemenscheiben auf einfache Weise Änderungen der Antriebscharakteristik ermöglicht.

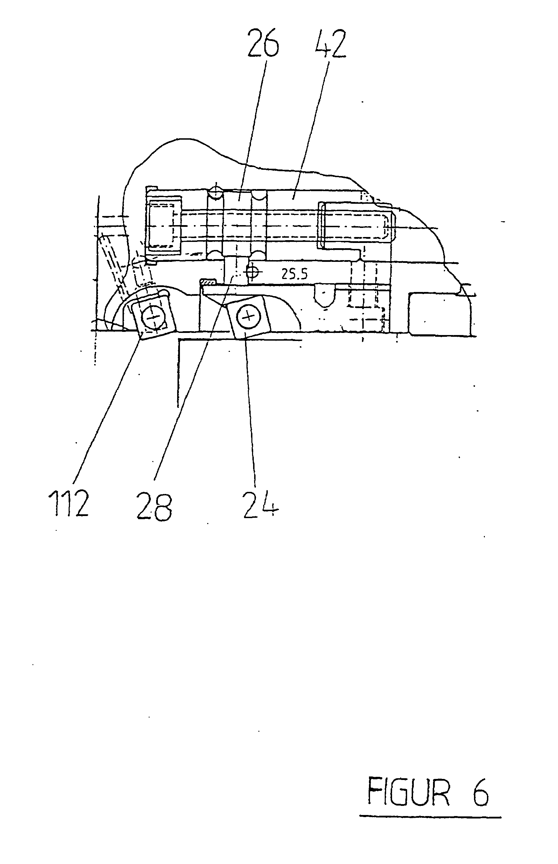

In Figur 6 ist eine Variante des Zustellsystems aus Figur 2 dargestellt. Bei diesem Ausführungsbeispiel ist die Wendeschneidplatte 24 ebenfalls an einem Biegeklemmhalter 30 befestigt, der über die Steuerfläche 26 und den daran anliegenden Stift 28 in Radialrichtung auslenkbar ist, um den Bohrungsdurchmesser auf einen Sollwert zu bringen.

Bei dem in Figur 6 dargestellten Ausführungsbeispiel ist der Schneide der Wendeschneidplatte 24 eine Vorbearbeitungsschneide 112 vorgeschaltet, über die die auszubildende Bohrung zunächst grob auf Maß bringbar ist, während die nachgeschaltete Wendeschneidplatte 24 die Feinstbearbeitung übernimmt. Wie Figur 6 entnehmbar ist, ist die Vorbearbeitungsschneide 112 nicht einstellbar ausgeführt.

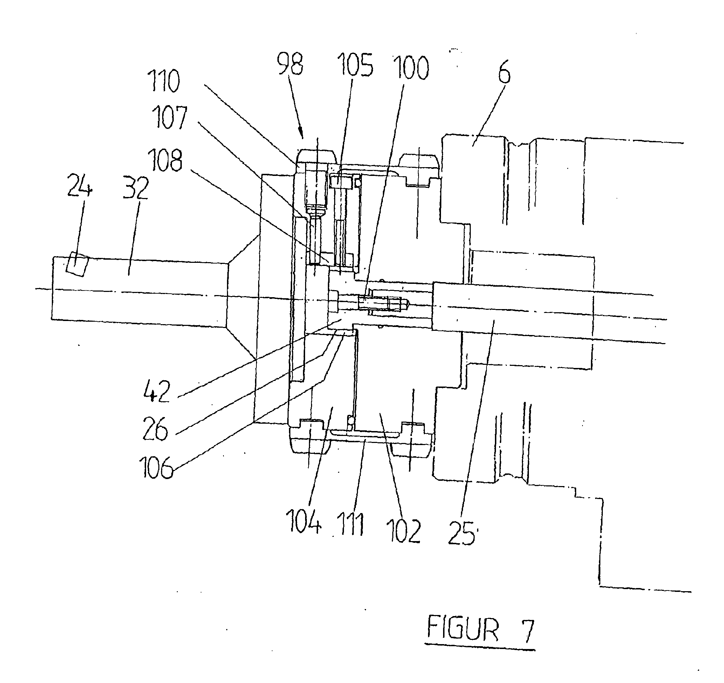

In Figur 7 ist ein Ausführungsbeispiel dargestellt, bei dem anstelle der an die Hauptspindel 6 gekoppelten Bohrstange 82 mit Biegeklemmhalter 30 ein Zustellkopf 98 verwendet wird. Dieses Ausführungsbeispiel ist nicht erfindungsgemäß.

Wie bei dem vorbeschriebenen erfindungsgemäßen Ausführungsbeispiel ist an der Betätigungswelle 25 ein Steuerteil 42 befestigt, an dessen Außenumfang eine Steuerfläche 26 ausgebildet ist. Diese kann -ähnlich wie bei dem in Figur 2 dargestellten Ausführungsbeispiel- wieder in Form einer Evolvente gekrümmt sein.

Die Steuerfläche 26 ist bei dem in Figur 7 gezeigten Ausführungsbeispiel an einem in Radialrichtung erweiterten Steuerbund ausgebildet. Die Befestigung des Steuerteiles 42 mit der Betätigungswelle 25 erfolgt mittels einer Axialschraube 100, die in einen stirnseitigen Zapfen der Betätigungswelle 25 eingeschraubt ist.

Der Zustellkopf 98 hat ein Führungskopfteil 102, das mit den Stirnseiten der Hauptspindel 6 verschraubt ist. Das Führungskopfteil 102 ist über zwei Parallelfedern 110, 111 mit einem Zustellkopfteil 104 verbunden, die die Trennebene zwischen den beiden Kopfteilen überbrücken. In der in Figur 7 dargestellten Grundposition ist das Zustellkopfteil 104 koaxial zum Führungskopfteil 102 gehalten. Die Parallelfedern 110, 111 gewährleisten, daß die Parallelanordnung der Kopfteile 102, 104 auch bei einer Radialverschiebung des Zustellkopfteils 104 aufrechterhalten bleibt.

Der mit der Steuerfläche 26 versehene Radialbund taucht in eine Führungsbohrung 106 des Zustellkopfteiles 104 ein und liegt an einer gehärteten Anlagescheibe 108 an, die mittels eines Paßstiftes 107 und einer Schraube 105 mit der Umfangswandung des Zustellkopfteiles 104 verbunden ist.

An der freien Stirnfläche des Zustellkopfteiles 104 ist die das Schneidwerkzeug 24 tragende Bohrstange 32 befestigt, so daß durch eine Radialverschiebung des Zustellkopfteiles 104 eine Zustellbewegung des Schneidwerkzeuges 24 bewirkt wird.

Die in Figur 7 dargestellte Position oder jedwede voreingestellte Relativposition des Zustellkopfteiles 104 mit Bezug zum Führungskopfteil 102 wird beibehalten, solange die Spindel 6 und die Betätigungswelle 25 mit gleicher Drehzahl synchron angetrieben werden. Sobald die Drehzahl der Betätigungswelle 25 gegenüber der Spindeldrehzahl verändert wird, erfolgt eine Relativverdrehung der Steuerfläche 26 mit Bezug zu der Anschlagscheibe 108, so daß aufgrund der Steigung der Evolventenkurve das Zustellkopfteil 104 radial nach außen oder nach innen bewegt und somit das Schneidwerkzeug 24 parallel zur Zustellrichtung verfahren wird. Während dieser Verschiebung des Zustellkopfteiles 104 mit Bezug zum Führungskopfteil 102 sorgen die beiden Parallelfedern 110, 111 für eine Parallelstellung dieser beiden Bauteile, so daß kein Kippen der Bohrstange 32 erfolgen kann. Ein derartiges Kippen würden die Schneidengeometrie verändern, so daß eine weitere Kompensation zum Ausgleich des damit verbundenen Fehlers erforderlich wäre.

Die Anschlagscheibe 108 wird über die beiden Parallelfedern 110, 111 in einer Anlageposition an der Steuerfläche 26 gehalten.

Die in Figur 7 dargestellte Konstruktion des Zustellkopfes mit zwei Parallelfedern und zueinander verschiebbaren Kopfteilen erlaubt nur vergleichsweise geringe Zustellbewegung, so daß ein derartiger Zustellstellkopfes mit zwei Parallelfedern und zueinander verschiebbaren erlaubt nur vergleichsweise geringe Zustellbewungen, so daß ein derartiger Zustellkopf bevorzugterweise kleinere Bohrungen, beispielweise mit einem Durchmesser bis zu 60 mm einsetzbar ist.

Die Bohrstange aus Figur 2 mit daran befestigtem Biegeklemmhalter (erfindungsgemäße Lösung) eignet sich besonders gut für größere Bohrungen.

Die Drehzahlen der Spindel 6 und der Betätigungswelle 25 werden über Meßaufnehmer 72 bzw. 62 aufgenommen, über die eine geeignete Ansteuerung erfolgt. Die Führungsgrößen für den Vorschub und für die Drehzahl der Motoren werden beispielsweise in einem Interpolator aus dem von den Meßaufnehmern 62, 72 erfaßten Daten, der Geometrie des Werkzeuges und der Vorschubbewegung generiert. In den als Folgesystem arbeitenden Lageregelkreisen werden über die Mechanik des Bohrschlittens und durch entsprechende Ansteuerung der Antriebsmotoren die gewünschte Ist-Position des Werkzeuges eingestellt. Wichtig ist dabei, daß die digitale oder analoge Antriebstechnik einen winkelgenauen Synchronbetrieb der Hauptspindel 6 und der Betätigungswelle ermöglichen, so daß die gewünschte Soll-Größe konstant gehalten werden kann. Das Konstruktionsprinzip mit ineinander geführten Antriebswellen (Spindel, Betätigungswelle) hat eine hohe Steifigkeit, die sich direkt an der Werkzeugschneide durch minimale Auslenkungen auswirkt. Da im wesentlichen rotationssymmetrische Teile verwendet werden, ist das erfindungsgemäße Zustellsystem auch für hohe Drehzahlen geeignet. Die dynamischen Servoantriebe (Zustellmotoren 56, 64) ermöglichen schnelle Zustellbewegungen, die auch während des Zerspanungsvorganges erfolgen können, so daß auch eine komplizierte Bohrungsgeometrie mit hoher Genauigkeit herstellbar sind.

Offenbart ist ein Zustellsystem für ein rotierendes Schneidwerkzeug, das von einer Spindel angetrieben wird und über eine Stelleinrichtung in Zustellrichtung verstellbar ist. Die Stelleinrichtung wird von einer Innenspindel angetrieben, die mittels eines eigenen Zustellmotors synchron mit der Spindel oder mit einer vorbestimmten Drehzahldifferenz mit Bezug zur Spindel antreibbar ist. Bei sychronem Antreiben von Betätigungswelle und Spindel erfolgt keine Zustellung, während bei Einstellung einer Drehzahldifferenz über die Stelleinrichtung eine Verstellung des Schneidwerkzeuges erfolgt. Nach Einstellung der Soll-Position des Schneidwerkzeuges werden die Betätigungswelle und die Spindel wieder mit gleicher Drehzahl betrieben.

## Patentansprüche

1. Zustellsystem für ein rotierendes Schneidwerkzeug, mit einer Werkzeugaufnahme (2, 32), die von einer Spindel (6) antreibbar ist mit einer die Werkzeugaufnahme (2, 32) in Zustellrichtung bewegenden Stelleinrichtung: die eine Steuerfläche (26) hat, der ein Übertragungselement (28, 108) zugeordnet ist, über das bei einer Relativbewegung der Steuerfläche (26) mit Bezug zum Übertragungselement (28, 108) die Werkzeugaufnahme (2, 32) in Stellrichtung verschiebbar ist, wobei die Steuerfläche in Evolventenform (50) gekrümmt ist, und mit einer Betätigungswelle (25), an deren Außenumfang die Steuerfläche (26) ausgebildet ist und die mittels eines eigenen Zustellmotors (56) synchron mit der Spindel (6) oder mit einer vorbestimmten Drehzahldifferenz dazu antreibbar ist, wobei die Werkzeugaufahme als mit der Spindel (6) gekoppelte Bohrstange (32) ausgeführt ist, **dadurch gekennnzeichnet, daß** an dem Außenumfang der Bohrstange (32) ein Biegeklemmhalter (30) befestigt ist, und daß das Übertragungselement (28, 108) ein eine Umfangswandung der Bohrstange (32) durchsetzender Radialstift (28) ist, der über einen freien Endabschnitt des Biegeklemmhalters (30) gegen die Steuerfläche (26) vorgespannt ist.

2. Zustellsystem nach Patentanspruch 1, **dadurch gekennzeichnet, daß** die Betätigungswelle (25) zumindest abschnittsweise in der Spindel (6) geführt ist.

3. Zustellsystem nach einem der vorhergehenden Patentansprüche, **dadurch gekennzeichnet, daß** die Steuerfläche (26) am Außenumfang eines Steuerteiles (42) ausgebildet ist, das drehfest mit einem Antriebsteil der Betätigungswelle (25) verbunden ist.

4. Zustellsystem nach einem der vorhergehenden Patentansprüche, **dadurch gekennzeichnet, daß** die Werkzeugaufnahme (2, 32) eine vorzugsweise nicht verstellbare Vorbearbeitungsschneide (112) trägt.

5. Zustellsystem nach einem der vorhergehen Patentansprüche, **dadurch gekennzeichnet, daß** Spindel (6) und Betätigungswelle (25) jeweils über einen Riemenantrieb (80, 82, 84; 90, 92, 94) antreibbar sind.

6. Zustellsystem nach einem der Patentansprüche 1 bis 5, **dadurch gekennzeichnet, daß** Spindel (6) und Betätigungswelle (25) jeweils mit einem Rotor (70, 58) eines Elektromotors (56, 64) gekoppelt sind.

## Claims

1. A feed system for a rotating cutting tool, comprising a tool holding fixture (2, 32) adapted to be driven by a spindle (6), an adjusting means moving the tool holding fixture (2, 32) in a feeding direction and including a control surface (26) with which a transmission element (28, 108) is associated, through which transmission element the tool holding fixture (2, 32) is translatable in a direction of adjustment in the event of a relative movement of the control surface (26) with respect to the transmission element (28, 108), the control surface being curved in the form of an involute (50), and an operating shaft (25), at the outer periphery of which the control surface (26) is formed, and which is adapted to be driven synchronously with the spindle (6) or at a predetermined difference in speed with respect thereto by means of a separate feed motor (56), the tool holding fixture having the form of a boring bar (32) coupled to the spindle (6), **characterised in that** at the outer circumference of the boring bar (32) a bending tool holder (30) is fastened and **in that** the transmission element (28, 108) is a radial pin (28) passing through a circumferential wall of the boring bar (32) and biased against the control surface (26) via a free end portion of the bending tool holder (30).

2. A feed system according to claim 1, **characterised in that** the operating shaft (25) is guided in the spindle (6) at least in portions.

3. A feed system according to either claim 1 or claim 2, **characterised in that** the control surface (26) is formed at the outer circumference of a control member (42) integrally connected to a drive member of the operating shaft (25).

4. A feed system according to any one of the preceding claims, **characterised in that** the tool holding fixture (2, 32) supports a premachining cutting edge (112) which is preferably not adjustable.

5. A feed system according to any one of the preceding claims, **characterised in that** the spindle (6) and the operating shaft (25) are each adapted to be driven via a belt drive (80, 82, 84; 90, 92, 94).

6. A feed system according to any one of claims 1 to 5, **characterised in that** the spindle (6) and the operating shaft (25) are each coupled to a rotor (70, 58) of an electric motor (56, 64).

## Revendications

1. Système d'avance pour un outil de coupe rotatif, comprenant un logement d'outil (2, 32) pouvant être entraîné par une broche (6), avec un dispositif de réglage déplaçant le logement d'outil (2, 32) dans la direction d'avance et présentant une surface de commande (26) à laquelle est associé un élément de transmission (28, 108), permettant lors d'un mouvement relatif de la surface de commande (26) par rapport à l'élément de transmission (28, 108) de déplacer le logement d'outil (2, 32) dans la direction d'avance, la surface de commande étant cintrée sous la forme d'une développante (50) et avec un arbre d'actionnement (25) comportant à sa circonférence extérieure la surface de commande (26) et pouvant être entraîné au moyen d'un moteur d'avance (56) lui étant propre, de manière synchronisée avec la broche (6) ou avec une différence de vitesse de rotation prédéterminée par rapport à celle-ci, le logement d'outil présentant la forme d'une tige de perçage (32) accouplée à la broche (6), **caractérisé en ce qu'** à la circonférence extérieure de la tige de perçage (32) un support de serrage flexible (30) est fixé, et **en ce que** l'élément de transmission (28, 108) est une cheville radiale (28) traversant une paroi circonférentielle de la tige de perçage (32) et qui est précontrainte contre la surface de commande (26) par une portion d'extrémité libre du support de serrage flexible (30).

2. Système d'avance selon la revendication 1,
**caractérisé en ce que** l'arbre d'actionnement (25) est guidé, du moins par portions, dans la broche (6).

3. Système d'avance selon l'une quelconque des revendications précédentes, **caractérisé en ce que** la surface de commande (26) est formée à la circonférence extérieure d'un élément de commande (42), qui est relié de manière immobile en rotation à un élément d'entraînement de l'arbre d'actionnement (25).

4. Système d'avance selon l'une quelconque des revendications précédentes, **caractérisé en ce que** le logement d'outil (2, 32) porte, de préférence de façon non-mobile, un taillant de dégrossissage (112).

5. Système d'avance selon l'une quelconque des revendications précédentes, **caractérisé en ce que** la broche (6) et l'arbre d'actionnement (25) peuvent être respectivement entraînés par un entraînement à courroie (80, 82, 84 ; 90, 92, 94).

6. Système d'avance selon l'une quelconque des revendications 1 à 5, **caractérisé en ce que** la broche (6) et l'arbre d'actionnement (25) sont respectivement accouplés à un rotor (70, 58) d'un moteur électrique (56, 64).
